# EUROPÄISCHE PATENTANMELDUNG

(11) **EP 1 536 504 A1**
(43) Veröffentlichungstag der Anmeldung: **01.06.2005**
(21) Anmeldenummer: 05003955.1
(22) Anmeldetag: 09.03.1999
(51) Int. Cl.: H01M 8/10, H01M 4/88

(54) **Tinte zur Herstellung von Membran-Elektroden-Einheiten sowie Verfahren zu ihrer Verwendung**

(30) Priorität: 23.03.1998 DE 19812592
(62) Teilanmeldung aus: 99104630.1
(71) Anmelder: Umicore AG & Co. KG, 63457 Hanau-Wolfgang (DE)
(72) Erfinder: Zuber, Ralf, Dr., 63762 Grossostheim (DE); Fehl, Knut, 36381 Schlüchtern-Ramholz (DE); Starz, Karl-Anton, Dr., 63517 Rodenbach (DE); Stenke, Udo, 63814 Mainaschaff (DE)
(74) Vertreter: VOSSIUS & PARTNER

(57) **Zusammenfassung**

Die Erfindung betrifft eine Tinte zur Herstellung von Membran-Elektroden-Einheiten für Polymer-Elektrolyt-Brennstoffzellen sowie ein Verfahren zu ihrer Verwendung. Die Tinte weist einen Katalysator, ein Ionomer und organische Lösungsmittel auf und wird zur Herstellung von porösen Reaktionsschichten verwendet, die wiederum beidseitig auf einer Polymer-Elektrolyt-Membran aufgebracht sind, um die Membran-Elektroden-Einheit bereitzustellen.
Die Tinte ist dadurch gekennzeichnet, daß als organische Lösungsmittel ein- und mehrwertige Alkohole, Glykole sowie Glykoletheralkohole und Glykolether mit einer Verdunstungszahl größer 600, bevorzugt größer 800, zum Einsatz kommen.

## Beschreibung

Die Erfindung betrifft Brennstoffzellen, insbesondere PEM-Brennstoffzellen, bei denen ein festes Polymer als Elektrolyt eingesetzt wird.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen.

Die sogenannte Polymer-Elektrolyt-Brennstoffzelle (PEM-Brehnstoffzelle) eignet sich aufgrund ihrer kompakten Bauweise; ihrer Leistungsdichte sowie ihres hohen Wirkungsgrades für den Einsatz als Energiewandler in Kraftfahrzeugen.

Die PEM-Brennstoffzelle besteht aus einer stapelweisen Anordnung ("Stack") von Membran-Elektroden-Einheiten (MEE), zwischen denen bipolare Platten zur Gaszufuhr und Stromleitung angeordnet sind. Eine Membran-Elektroden-Einheit besteht aus einer Polymer-Elektrolyt-Membran, die auf beiden Seiten mit Reaktionsschichten, den Elektroden, versehen ist. Eine der Reaktionsschichten ist als Anode für die Oxidation von Wasserstoff und die zweite Reaktionsschicht als Kathode für die Reduktion von Sauerstoff ausgebildet. Auf die Elektroden werden sogenannte Gasverteilerstrukturen aus Kohlefaserpapier oder Kohlevlies aufgebracht, die einen guten Zugang der Reaktionsgase zu den Elektroden und eine gute Ableitung des Zellenstroms ermöglichen. Anode und Kathode enthalten sogenannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Die mittlere Kristallitgröße der Platingruppenmetalle liegt dabei etwa zwischen 1 und 10 nm. Als Trägermaterialien haben sich feinteilige Ruße bewährt.

Die Polymer-Elektrolyt-Membran besteht aus Protonen leitenden Polymermaterialien. Diese Materialien werden im folgenden auch kurz als Ionomer bezeichnet. Bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion® von E.I. du Pont vertrieben. Es sind jedoch auch andere, insbesondere fluorfreie Ionomermaterialien, wie sulfonierte Polyetherketone oder Arylketone oder Polybenzimidazole einsetzbar.

Die US-PS 4,876,115 beschreibt ein Verfahren zur Behandlung einer porösen Gasdiffusionselektrode, welche eine Katalysatorbeladung von weniger als 0,5 mg/cm² auf Kohlenstoffpartikeln aufweist. Die Elektrode wird mit einer Lösung eines Protonen leitenden Materials imprägniert. Hierdurch werden die Oberflächen der Kohlenstoffpartikel mit dem Protonen leitenden Material beschichtet.

In der US-PS 5,234,777 wird eine Membran-Elektroden-Einheit vorgeschlagen, die aus einer Polymer-Elektrolyt-Membran und einer zusammengesetzten Schicht eines Platin-Trägerkatalysators und einem Ionomer besteht. Diese Schicht ist dadurch gekennzeichnet, daß sie weniger als 10 µm dick und der Platin-Trägerkatalysator gleichmäßig in dem Protonen leitenden Ionomer dispergiert ist. Die Platinbeladung der Elektroden beträgt weniger als 0,35 mg/cm². Die Elektrodenschichten sind mit der Polymer-Elektrolyt-Membran verbunden.

Zur Herstellung der Membran-Elektroden-Einheiten nach US-PS 5,234,777 werden verschiedene Verfahren beschrieben. In einer Ausführungsform wird der Pt/C-Trägerkatalysator in einer alkoholischen Lösung des Ionomers dispergiert. Diese Dispersion, auch als Tinte bezeichnet, wird auf eine PTFE-Trägerfolie (PTFE: Polytetrafluorethylen) aufgebracht, getrocknet und durch Heißpressen auf die gegenüberliegenden Seiten einer Polymer-Elektrolyt-Membran auflaminiert.

In einer weiteren Ausführungsform wird die Polymer-Elektrolyt-Membran direkt mit einer Tinte eines Pt/C-Trägerkatalysators und einer Lösung eines Ionomers beschichtet. Die aufgebrachte Schicht wird bei mindestens 150°C getrocknet.

Die Reaktionsschichten nach US-PS 5,234,777 zeichnen sich durch eine homogene Verteilung des Katalysators im Ionomer aus. Durch das Heißpressen werden dichte und porenfreie Schichten von weniger als 10 µm, bevorzugt von 5 µm Dicke, mit Platinbeladungen von weniger als 0,35 mg Pt/cm² hergestellt. Bei den Membran-Elektroden-Einheiten nach US-PS 5,234,777 ist aufgrund der dichten, porenfreien Reaktionsschicht der Zugang der Reaktionsgase zum Katalysator begrenzt. Dies wirkt sich negativ auf die elektrochemische Leistung der PEM-Zelle, insbesondere beim Betrieb mit verdünnten Gasen wie Luft oder Reformatgas, aus. Die mögliche Verwendung von Luft und Reformatgas anstelle von Sauerstoff und Wasserstoff ist jedoch eine wichtige Voraussetzung für den wirtschaftlichen Einsatz von Brennstoffzellen in Kraftfahrzeugen.

Ein weiterer Nachteil des in US-PS 5,234,777 beschriebenen Verfahrens ist die hohe Trocknungstemperatur von mindestens 150 °C. Bei diesen Bedingungen können sich Lösungsmitteldämpfe an der Katalysatorschicht entzünden und die Membran-Elektroden-Einheit zerstören.

In der DE 196 02 629 A1 wird ein Verfahren zur Herstellung einer Membran-Elektroden-Einheit vorgeschlagen, bei dem ein Edelmetallkatalysator auf einem Kohlenstoffträger verwendet wird, an dem das Ionomer als Kolloid adsorbiert ist. Dazu wird eine kolloidale Lösung des Ionomers in einem geeigneten organischen Lösungsmittel hergestellt und der Trägerkatalysator damit behandelt. Der mit dem Kolloid beschichtete Trägerkatalysator wird zu einer Tinte verarbeitet und damit eine Elektrode hergestellt, die mit der Polymer-Elektrolyt-Membran verpresst wird.

Die nach DE 196 02 629 A1 hergestellten Membran-Elektroden-Einheiten zeigen jedoch keinen verbesserten Zugang der Reaktionsgase zum Katalysator. Weiterhin ist es sehr schwierig, eine definierte und reproduzierbare Verteilung des Ionomers in kolloidaler Form auf dem Trägerkatalysator zu erreichen. Die Stabilität des kolloidalen Ionomers ist begrenzt. Die Übertragung des Verfahrens in eine Serienfertigung ist daher nur bedingt möglich.

In der EP 0 797 265 A1 wird eine Membran-Elektroden-Einheit für PEM-Brennstoffzellen mit einer hohen Gesamtporosität und verbesserter elektrochemischer Leistung beschrieben. Die hohe Porosität wird durch den Einsatz von Porenbildnern in Kombination mit einem speziellen Sprühverfahren erreicht. Das Verfahren besitzt den Nachteil, daß der Porenbildner zu Kontaminationen führt und zusätzliche Schritte benötigt werden, um den Porenbildner aus der Membran-Elektroden-Einheit zu entfernen.

Für den breiten kommerziellen Einsatz von PEM-Brennstoffzellen in Kraftfahrzeugen ist eine weitere Verbesserung der elektrochemischen Zellenleistung sowie eine deutliche Verminderung der Systemkosten notwendig, die zum großen Teil durch die benötigten Platingruppenmetalle verursacht werden. Zur Verringerung der Kosten pro Kilowatt installierter Leistung muß daher die Beladung der Elektroden einer PEM-Zelle mit den Platingruppenmetallen vermindert werden. Hierfür ist es erforderlich, die Elektrokatalysatoren weiter zu verbessern und effektiver auszunutzen.

Es war daher die Aufgabe der vorliegenden Erfindung, eine verbesserte Membran-Elektroden-Einheit sowie Verfahren zu deren Herstellung bereitzustellen, die die beschriebenen Nachteile des Standes der Technik vermeiden. Insbesondere war es die Aufgabe, den Gastransport in der Reaktionsschicht zu erleichtern und somit einen verbesserten Zugang der Reaktionsgase zum Katalysator zu ermöglichen.

Diese Aufgabe wird durch eine Membran-Elektroden-Einheit für Polymer-Elektrolyt-Brennstoffzellen gelöst, welche eine Polymer-Elektrolyt-Membran mit beidseitig aufgebrachten porösen Reaktionsschichten aus Katalysator und Ionomer aufweist. Die Membran-Elektroden-Einheit ist dadurch gekennzeichnet, daß die Reaktionsschichten eine inhomogene Mikrostruktur aufweisen, welche gebildet wird aus einem mit Ionomer durchtränkten und im Ionomer eingebetteten Anteil A1 des Katalysators und dem restlichen Anteil A2 des Katalysators, der vom Ionomer freigehalten ist, wobei die Anteile A1 und A2 im Gewichtsverhältnis von 1:1 bis 20:1, bevorzugt von 3:1 bis 10:1, stehen.

Die erfindungsgemäße Mikrostruktur der Membran-Elektroden-Einheit wird von den beiden unterschiedlichen Katalysatoranteilen A1 und A2 gebildet, die miteinander vermischt sind. Die beiden Katalysatoranteile sind gleichmäßig über die jeweilige Reaktionsschicht verteilt. Es liegt also keine makroskopische Inhomogenität vor, wie zum Beispiel in Form eines für beide Katalysatoranteile unterschiedlichen Konzentrationsgradienten über die Dicke der Reaktionsschicht. Die Inhomogenität besteht vielmehr darin, daß die unterschiedlich aufgebauten Katalysatorpartikel (mit und ohne Umhüllung aus Ionomer) miteinander vermischt sind und somit eine Inhomogenität im Nahbereich der Katalysatorpartikel vorliegt.

Die inhomogene Mikrostruktur ermöglicht einen sehr guten Zu- und Abgang der Reaktionsgase über die von Ionomer freigehaltenen Katalysatorpartikel, wie auch eine verlustarme Ableitung des Protonenstroms über die mit Ionomer durchtränkten Partikel. Durch Wahl der Gewichtsanteile A1 und A2 können die Eigenschaften der Reaktionsschichten optimiert werden.

Zur Herstellung der erfindungsgemäßen Membran-Elektroden-Einheit wird ein aus den folgenden Schritten bestehendes Verfahren eingesetzt:
a) Anfertigen einer Tinte A durch Dispergieren des Anteils A1 des Katalysators in einer Lösung aus einem Ionomer in einem Lösungsmittel A,
b) Anfertigen einer Tinte B durch Dispergieren des Anteils A2 des Katalysators in einem Lösungsmittel B,
c) Vereinigen von Tinte A und Tinte B zu einer gemeinsamen Tinte C,
d) Homogenisieren von Tinte C,
e) Beschichten der Polymer-Elektrolyt-Membran mit Tinte C und
f) Trocknen der Beschichtung,
wobei Lösungsmittel A und B nicht miteinander mischbar sind und Lösungsmittel B kein Lösevermögen für das Ionomer aufweist.

Die spezielle Struktur der Membran-Elektroden-Einheit beruht also auf der Verwendung einer Tinte C, die durch Vereinigen und sorgfältiges Homogenisieren der beiden Tinten A und B gebildet wird. Der Katalysatoranteil A1 in Tinte A ist vom Ionomer durchtränkt. Der Katalysatoranteil A2 in Tinte B kommt dagegen nicht mit Ionomer in Kontakt. Dies bleibt auch nach Vereinigen der beiden Tinten so, da die Lösungsmittel A und B nicht miteinander mischbar sind und außerdem das Lösungsmittel B kein oder nur ein sehr schlechtes Lösevermögen für das Ionomer aufweist.

Beim Trocknen der Tinten verdampfen die Lösungsmittel und lassen eine hochporöse Reaktionsschicht zurück. Das Porenvolumen der so hergestellten Reaktionsschichten liegt zwischen 0,7 und 1,3, bevorzugt zwischen 0,8 und 1,2 ml/g, für Poren mit Durchmessern von 0,03 bis 1 µm. Beim Verdampfen der Lösungsmittel wird gleichzeitig auch das Ionomer verfestigt, so daß es nicht nachträglich die Katalysatorpartikel von Katalysatoranteil A2 benetzen kann. Durch das Lösungsmittel der Tinte B wird also erzwungen, daß die in ihr enthaltene Menge an Katalysator auch in der fertigen Schicht von Ionomer freigehalten ist.

In Schritt a) des Verfahrens wird der vorgesehene Anteil A1 des Katalysators in einer Lösung des Ionomers dispergiert. Dabei wird der Katalysator vom Ionomer durchtränkt. Lösungsmittel A muß ein gutes Lösevermögen für das Ionomer aufweisen. Das Ionomer wird in einer Konzentration von 1 bis 10 Gew.-%, bezogen auf das Gesamtgewicht der Lösung, in Lösungsmittel A gelöst.

Für das Verfahren ist also die richtige Auswahl der Lösungsmittel entscheidend. Die Auswahl ist abhängig vom Ionomer, welches für die Reaktionsschichten eingesetzt werden soll. Die folgenden Angaben zu möglichen Lösungsmitteln gelten für den Fall, daß als Ionomer ein Tetrafluorethylen-Fluorvinylether-Copolymer mit Säuregruppen verwendet wird. Wie schon eingangs erwähnt, ist ein solches Material unter dem Handelsnamen Nafion® erhältlich. Soll ein anderes Ionomer verwendet werden, so sind unter Umständen andere Lösungsmittel zu wählen, die den Forderungen des Verfahrens gerecht werden. Dabei läßt die Forderung, daß Lösungsmittel A und B nicht mischbar sein sollen, eine Mischbarkeit im geringen Umfang zu, wenn dadurch die Struktur der erzielbaren Reaktionsschichten nur unwesentlich von der erfindungsgemäßen Struktur abweicht. Gleiches gilt für die Forderung, daß Lösungsmittel B kein Lösevermögen für das Ionomer aufweisen soll.

Als Lösungsmittel A kommen ein- und mehrwertige Alkohole, Glykole sowie Glykoletheralkohole und Glykolether mit einer Verdunstungszahl (VZ) größer 600, bevorzugt größer 800, zum Einsatz. Die Verdunstungszahl wird nach DIN 53170 bestimmt. Sie ist ein relativer Wert. Als Bezugsgröße dient Diethyläther. Durch die Verdunstungszahl von über 600 ist das Lösungsmittel für Siebdruckverfahren geeignet. Beispiele für geeignete Lösungsmittel sind Propylenglykol, Dipropylenglykol, Glyzerin, Hexylenglykol und andere.

Als Lösungsmittel B werden unpolare Kohlenwasserstoffe oder schwach polare Lösungsmittel verwendet, die kein Lösevermögen für das in Tinte A eingesetzte Ionomer zeigen und nicht mit Lösungsmittel A mischbar sind. Beispiele sind langkettige Paraffine wie Shell-Sol D70 oder langkettige aliphatische Carbonsäureester wie Dodecansäuremethylester (Methyldodecanoat) oder Decansäureethylester (Ethyldecanoat). Auch diese Materialien müssen für Siebdruckverfahren geeignet sein und Verdunstungszahlen (VZ) größer als 600 aufweisen.

Nach Vereinigung von Tinte A und Tinte B zu Tinte C wird Tinte C homogenisiert. Dabei können bekannte Hilfsmittel zum Einsatz kommen, wie zum Beispiel Hochgeschwindigkeitsrührer, Ultraschallbäder oder Dreiwalzwerke.

Die homogenisierte Mischung kann mittels verschiedener Techniken auf die Polymer-Elektrolyt-Membran aufgebracht werden. Hierzu gehören zum Beispiel das Sprühen, Pinseln, Streichen oder Drucken.

Die Trocknung der aufgebrachten Schicht sollte bei Temperaturen zwischen 60 und 140, bevorzugt zwischen 70 und 120°C, erfolgen. Die Reaktionsschichten weisen Schichtdicken zwischen 5 und 100, bevorzugt zwischen 10 und 100 µm auf. Unterhalb einer Dicke von 5 µm wird die Schicht aufgrund ihrer porösen Struktur unregelmäßig. Daraus resultiert eine verminderte elektrische Leitfähigkeit. Oberhalb von 100 µm nimmt die elektrochemische Nutzbarkeit der Reaktionsschicht deutlich ab. Für die häufigsten Anwendungsfälle haben sich Schichtdicken zwischen 15 und 50 µm besonders bewährt.

Der Anteil des in Tinte B dispergierten Katalysators liegt zwischen 5 und 50 Gew.-%, vorzugsweise zwischen 10 und 25 Gew.-%, jeweils bezogen auf das Gesamtgewicht des Katalysators (Anteil A1 + Anteil A2).

Der Anteil von Lösungsmittel B an der Gesamtmenge von Lösungsmittel in der gemischten Tinte sollte zwischen 5 und 35 Gew.-%, bevorzugt zwischen 10 und 25 Gew.-%, liegen. Ein zu großer Anteil an Lösungsmittel B beeinträchtigt die Konsistenz der Tinte. Für die Herstellung der erfindungsgemäßen Membran-Elektroden-Einheiten sollte ein Mindestanteil von 5 Gew.-% an Lösungsmittel B nicht unterschritten werden, um eine ausreichende Benetzung der in Tinte B enthaltenen Menge des Katalysators zu gewährleisten.

Als Katalysatoren können alle auf dem Gebiet der Brennstoffzellen bekannten Trägerkatalysatoren als auch trägerfreie Katalysatoren eingesetzt werden. Im Falle von Trägerkatalysatoren wird als Träger ein feinteiliger, elektrisch leitfähiger Kohlenstoff eingesetzt. Bevorzugt werden Ruße, Graphit oder Aktivkohlen verwendet. Als katalytisch aktive Komponente dienen die Platingruppenmetalle Platin, Palladium und Rhodium oder Legierungen davon. Die katalytisch aktiven Metalle oder Metallegierungen können weitere Legierungszusätze wie Ruthenium, Kobalt, Chrom, Wolfram, Molybdän, Vanadium, Eisen, Kupfer, Nickel etc. enthalten. Abhängig von der Schichtdicke der Elektrode sind Flächenkonzentrationen an Metall in den Reaktionsschichten zwischen 0,01 und 5 mg Metall/cm² möglich. Für die Herstellung der Reaktionsschichten können Platin-Elektrokatalysatoren auf Ruß (Pt/C) mit 5 bis 80 Gew.-% Platin, aber auch trägerfreie Katalysatoren wie beispielsweise Platin-Mohre oder Platin-Pulver mit hoher Oberfläche eingesetzt werden. Häufig wird als Träger der Ruß Vulcan XC 72 der Firma Cabot verwendet.

Die folgenden Beispiele und Figuren verdeutlichen das Wesen der Erfindung. Es zeigen:
- **Figur 1:**: Aufbau der erfindungsgemäßen Reaktionsschichten
- **Figur 2:**: Zellspannung in Abhängigkeit von der Stromdichte bei Luftbetrieb für die MEE von Beispiel 1 und Vergleichsbeispiel 1
- **Figur 3:**: Zellspannung in Abhängigkeit von der Stromdichte bei Luftbetrieb für die MEE von Beispiel 2 und Vergleichsbeispiel 1
- **Figur 4:**: Porosimeterkurve für Vergleichsbeispiel 1
- **Figur 5:**: Porosimeterkurve für Beispiel 3

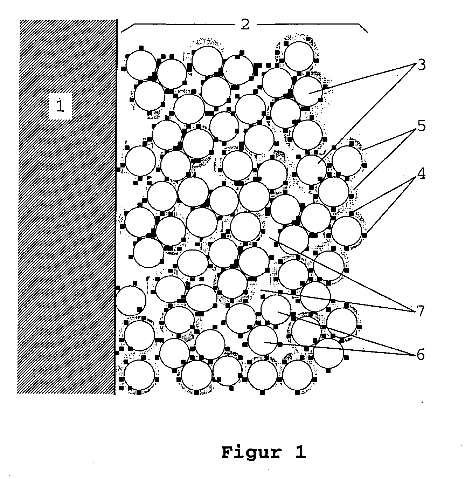

Figur 1 zeigt den Aufbau der inhomogenen Mikrostruktur der erfindungsgemäßen Reaktionsschichten. (1) bezeichnet die Polymer-Elektrolyt-Membran. Auf dieser Membran ist die Reaktionsschicht (2) aufgebracht. (3) und (6) bezeichnen die Kohlenstoff-Trägerpartikel und (4) die auf den Trägerpartikeln abgeschiedenen Kristallite der katalytisch aktiven Metallkomponenten. Die Kohlenstoffpartikel (3) gehören zum Katalysatoranteil A1. Sie sind mit Ionomer durchtränkt und im Ionomer eingebettet, was durch die die Partikel (3) umgebende Ionomerhülle (5) verdeutlicht ist. Die Kohlenstoffpartikel (6) gehören dem Katalysatoranteil A2 an. Sie sind weder mit Ionomer durchtränkt noch im Ionomer eingebettet. Zwischen den Partikeln befinden sich Poren (7), die durch das verdampfende Lösungsmittel B zurückgelassen wurden.

Durch die enge Nachbarschaft von unterschiedlichen Katalysatorpartikeln (mit und ohne Einbettung im Ionomer) entsteht eine inhomogene Mikrostruktur der Reaktionsschichten.

Die Beispiele 1 - 4 beschreiben die Herstellung von erfindungsgemäßen Membran-Elektroden-Einheiten, während das Vergleichsbeispiel VB1 die Herstellung einer Membran-Elektroden-Einheit nach US-PS 5,234,777, Protocol II, zeigt. Alle Membran-Elektroden-Einheiten wurden in einer PEM-Brennstoffzelle mit einer Fläche der Elektrode von 25 cm² im drucklosen Wasserstoff/Luft-Betrieb (1bar/1bar) getestet. Als Material zur Gasverteilung diente Kohlefaserpapier des Typs TGP-H-090/30% wet proof der Fa. ETEK Inc., Natick(USA).

Polymer-Elektrolyt-Membranen können in einer azidischen, Protonen leitenden H⁺-Form oder nach Austausch der Protonen gegen einwertige Ionen wie zum Beispiel Na⁺ und K⁺ in einer nichtazidischen Na⁺- oder K⁺-Form vorliegen. Die nichtazidische Form der Polymermembranen ist gewöhnlich gegenüber Temperaturbelastungen beständiger als ihre azidische Form.

In den folgenden Beispielen wurden daher die Protonen leitenden Materialien in ihrer Na⁺-Form verwendet. Im letzten Verfahrensschritt der Herstellung wurden die Ionomere durch sogenannte Rück-Protonierung wieder in die azidische, Protonen leitende Form überführt. Die Rück-Protonierung erfolgte durch Behandeln der Membran-Elektroden-Einheiten in Schwefelsäure.

### Vergleichsbeispiel 1 (VB1):

In Anlehnung an Protocol II der US-PS 5,234,777 wurde eine MEE wie folgt hergestellt: Es wurde eine Dispersion von 1 g Pt/C-Katalysator (Trägerkatalysator 20%Pt auf Vulcan XC72), 10 g einer 5%-igen Nafion-Lösung in niedrigsiedenden Alkoholen (Fa. Aldrich, Karlsruhe), 3,3 g Glycerin, 8,2 g Wasser und 0,47 g 1 N NaOH-Lösung hergestellt. Die Mischung wurde im Ultraschallbad dispergiert. Eine Nafion® 115 - Membran in Na⁺-Form wurde auf einer beheizten Platte befestigt. Die Mischung wurde auf eine Seite der Membran aufgebracht und bei 150°C getrocknet. Diese Prozedur wurde so lange wiederholt, bis die gewünschte Platinbeladung von 0,25 mg Pt/cm² erreicht war. Anschließend wurde auch die Rückseite der Membran in gleicher Weise beschichtet. Vor dem Einsatz in der PEM-Brennstoffzelle wurde die mit Katalysator beschichtete Membran in 0,5 M Schwefelsäure-Lösung reprotoniert. Die Schichtdicke der Elektrode betrug 10 µm. Die Gesamtbeladung der Membran-Elektroden-Einheit mit Platin betrug 0,5 mg/cm².

### Beispiel 1:

| Zur Herstellung einer Membran-Elektroden-Einheit wurden die folgenden Tinten hergestellt : | | |
|---|---|---|
| **Tinte A** | Trägerkatalysator 20% Pt auf Vulcan XC 72 | 24 g |
| | Nafion-Lösung (6,7% in Propylenglykol) | 150,0 g |
| | Natronlauge (10%) | 3,0 g |
| **Tinte B** | Trägerkatalysator 20% Pt auf Vulcan XC 72 | 6 g |
| | Dodecansäuremethylester | 40 g |
| | Natronlauge (10%) | 1 g |

### Beispiel 2:

| Zur Herstellung einer weiteren Membran-Elektroden-Einheit wurden folgende Tinten hergestellt: | | |
|---|---|---|
| **Tinte A** | Trägerkatalysator 20% Pt auf Vulcan XC 72 | 11,1 g |
| | Nafion-Lösung (5,4% in Propylenglykol) | 74,0 g |
| | Natronlauge (10%) | 1,0 g |
| **Tinte B** | Trägerkatalysator 20% Pt auf Vulcan XC 72 | 1,3 g |
| | Dodecansäuremethylester | 16,3 g |
| | Natronlauge (10%) | 0,7 g |

### Beispiel 3:

| Es wurden die folgenden Tinten hergestellt: | | |
|---|---|---|
| **Tinte A** | Trägerkatalysator 20% Pt auf Vulcan XC 72 | 16,7 g |
| | Nafion-Lösung (4,15% in Propylenglykol) | 164,0 g |
| | Natronlauge (10%) | 2,0 g |
| **Tinte B** | Trägerkatalysator 20% Pt auf Vulcan XC 72 | 4,1 g |
| | Dodecansäuremethylester | 13,5 g |
| | Natronlauge (10%) | 0,5 g |

### Beispiel 4:

| Zur Herstellung einer weiteren Membran-Elektroden-Einheit wurden folgende Tinten hergestellt: | | |
|---|---|---|
| **Tinte A** | Trägerkatalysator 20% Pt auf Vulcan XC 72 | 10,8 g |
| | Nafion-Lösung (3,8% in Propylenglykol) | 117,0 g |
| | Natronlauge (10%) | 1,5 g |
| **Tinte B** | Trägerkatalysator 20% Pt auf Vulcan XC 72 | 2,5 g |
| | Shellsol D70 (Fa. Shell) | 12,5 g |
| | Natronlauge (10%) | 0,5 g |

Die Tinten A und B der Beispiele 1 bis 4 wurden jeweils zu einer Tinte C vereinigt und sorgfältig homogenisiert. Die fertigen Tinten hatten die in Tabelle 1 wiedergegebenen Eigenschaften:

**Tabelle 1:**

| Eigenschaften der fertigen Tinten C | | | | | |
|---|---|---|---|---|---|
| | Beispiel | | | | |
| | 1 | 2 | 3 | 4 | |
| Viskosität | 1,3 | 1,5 | 0,43 | 1,8 | Pa·s |
| Anteil des Lösungsmittels B an Gesamtmenge der Lösungsmittel A+B | 22,2 | 18,8 | 7,9 | 10,0 | Gew.-% |
| Anteil A2 des in Tinte B dispergierten Katalysators, bezogen auf A1+A2 | 20 | 10,5 | 19,7 | 18,8 | Gew.-% |
| A1:A2 | 4:1 | 9:1 | 4:1 | 4,4:1 | |

Die Viskosität der Tinten wurden mit einem Haake-Rotations-Viskosimeter RV20 bei 100 s⁻¹ gemessen.

Die Tinten wurden im Siebdruckverfahren auf Nafion® 115 - Membranen in der Na⁺-Form aufgedruckt und bei 110°C getrocknet. Anschließend wurde die Rückseite der Membranen auf die gleiche Weise mit der Katalysatortinte beschichtet. Die Reprotonierung erfolgte in 0,5 M Schwefelsäure. Die Platinbeladung pro Reaktionsschicht betrug bei allen erfindungsgemäßen Beispielen 0,225 mg Pt/cm². Das entsprach einer Gesamtbeladung der Membran-Elektroden-Einheit mit Platin von 0,45 mg/cm². Die Schichtdicken lagen im Bereich zwischen 20 und 25 µm.

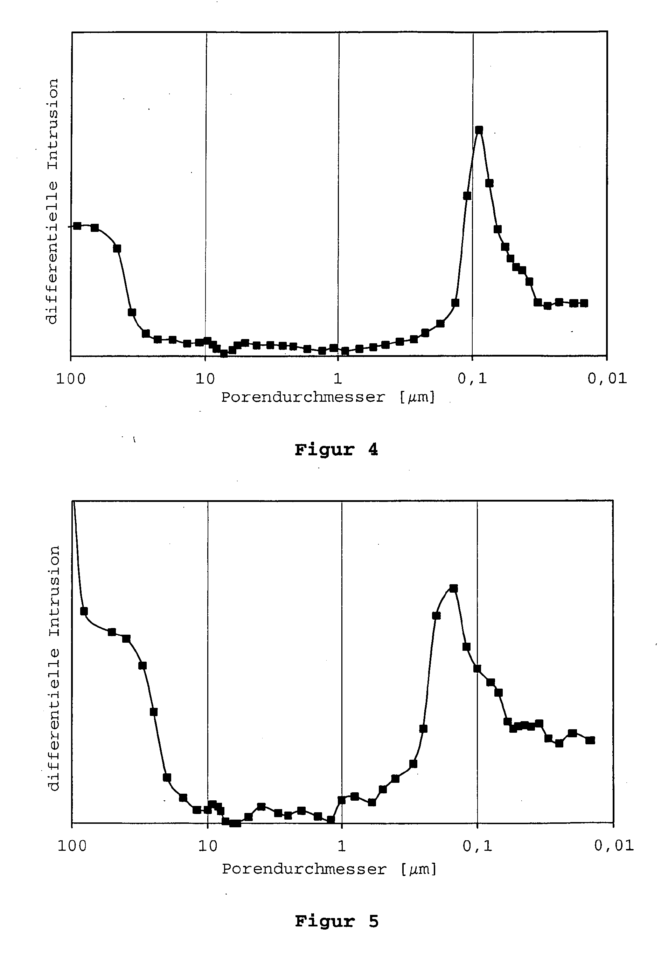

Mit Hilfe der Quecksilber-Porosometrie wurde die Porenverteilung der Reaktionschichten ermittelt. Die erfindungsgemäßen Reaktionsschichten zeigten ein deutlich größeres Porenvolumen gegenüber den Reaktionsschichten von Vergleichsbeispiel 1. Das verbesserte Porenvolumen wurde ohne Zusatz von externen Porenbildnern erreicht. Die für Beispiel 3 und Vergleichsbeispiel 1 gemessenen Porenvolumina sind in Tabelle 2 aufgelistet. Die erfindungsgemäßen Reaktionsschichten zeichnen sich durch ein größeres Porenvolumen und durch eine andere Porenstruktur aus. Die Porenradien im Bereich des Maximums der Porenverteilung sind bei den erfindungsgemäßen Reaktionsschichten etwa doppelt so groß wie im Vergleichsbeispiel 1. Die Figuren 4 und 5 zeigen die Meßkurven der Porosimetermessungen für das differentielle Eindringen des Quecksilbers in die Poren der Schichten.

**Tabelle 2:**

| Porenvolumen und Porenverteilung | | |
|---|---|---|
| Beispiel | Porenvolumen d=0,03 bis 1 µm [ml/g] | Maximum der Porenverteilung bei [µm] |
| VB1 | 0,6 | 0,09 |
| B3 | 0,88 | 0,2 |

Die inhomogene Mikrostruktur der in dieser Erfindung beschriebenen Reaktionsschichten wurde mit XPS (X-ray photoelutron spectroscopy) untersucht. Diese Meßmethode liefert Informationen über die chemische Zusammensetzung und den Oxidationszustand in den obersten Atomlagen der untersuchten Oberfläche.

Tabelle 3 zeigt die Bindungsenergien von Schwefel-XPSbanden für den Platin-Trägerkatalysator und für die Reaktionsschichten von Beispiel 1 und Vergleichsbeispiel 1.

**Tabelle 3:**

| XPS-Daten | Katalysator 20% Pt auf Vulcan XC72 | Beispiel 1 | Vergleichs-beispiel 1 |
|---|---|---|---|
| Bindungsenergie (eV) | 163,7 | 168,7/163,6 | 168,4 |

Die Schwefelbande bei 163,6 eV des Katalysators kann den Sulfangruppen an der Oberfläche des als Träger verwendeten Vulcan XC72 zugeordnet werden. Die Bande bei 168,4 eV, die bei der Untersuchung der Membran-Elektroden-Einheit des Vergleichsbeispiels gefunden wurde wird durch die SO₃H Gruppen von Nafion hervorgerufen. In diesem Fall wird die Bande der Sulfangruppen nicht gefunden, was zeigt, daß die Katalysatorpartikel dieser Reaktionsschicht vollständig mit Nafion bedeckt sind.

Im Gegensatz dazu zeigt die Membran-Elektroden-Einheit von Beispiel 1 beide XPS-Banden-die Sulfanbande des Katalysatorträgers und die SO₃H-Bande des Nafions. Das zeigt eindeutig, daß ein erheblicher Anteil der Katalysatorpartikel nicht in Nafion eingebettet ist, wie es in Figur 1 für die Katalysatorpartikel 6 gezeigt ist.

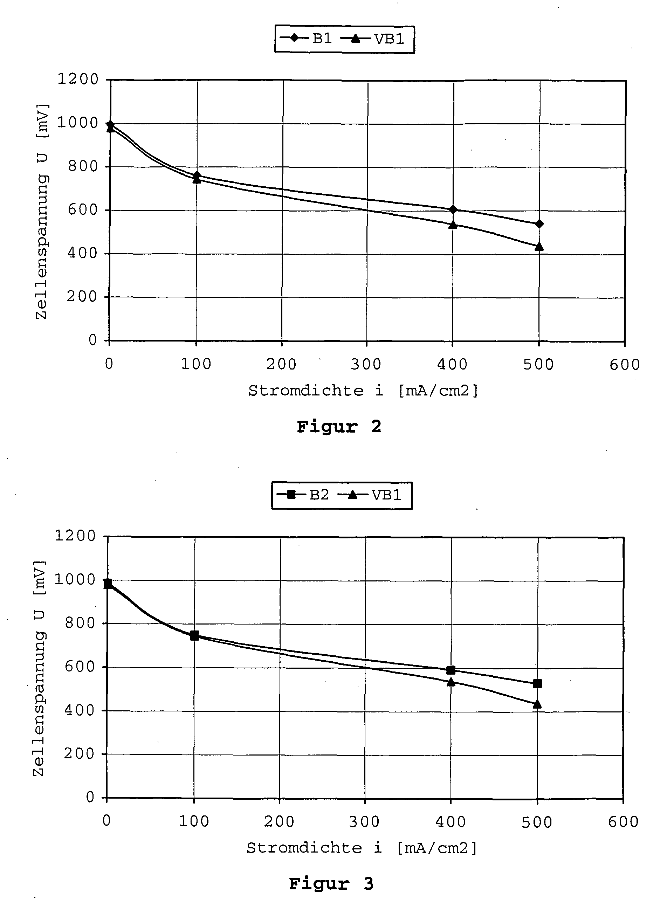

Die gemessenen Zellspannungen im Wasserstoff/Luftbetrieb in Abhängigkeit von der Stromdichte sind beispielhaft in Figur 2 für die Zellen von Vergleichsbeispiel 1 und Beispiel 1 und in Figur 2 für die Zellen von Vergleichsbeispiel 1 und von Beispiel 2 dargestellt. Man erkennt, daß die erfindungsgemäßen Membran-Elektroden-Einheiten eine deutlich verbesserte elektrische Leistung im Vergleich zum Stand der Technik (VB1) liefern.

Tabelle 3 zeigt die bei einer Belastung der Zellen mit einer Stromdichte von 500 mA/cm² noch gemessenen Zellspannungen.

**Tabelle 3:**

| Zellspannungen im Wasserstoff/Luftbetrieb bei 500 mA/cm² | |
|---|---|
| Beispiel | Zellspannung [mV] |
| Vergleichsbeispiel 1 | 436 |
| Beispiel 1 | 540 |
| Beispiel 2 | 530 |
| Beispiel 3 | 495 |
| Beispiel 4 | 487 |

## Patentansprüche

1. Tinte zur Herstellung von Membran-Elektroden-Einheiten für Polymer-Elektrolyt-Brennstoffzellen, welche einen Katalysator, ein Ionomer und organische Lösungsmittel aufweist,
**dadurch gekennzeichnet,**
**daß** als organische Lösungsmittel ein- und mehrwertige Alkohole, Glykole sowie Glykoletheralkohole und
Glykolether mit einer Verdunstungszahl größer 600, bevorzugt größer 800, zum Einsatz kommen.

2. Tinte nach Anspruch 1,
**dadurch gekennzeichnet,**
**daß** als organische Lösungsmittel Propylenglykol, Dipropylenglykol, Glycerin oder Hexylenglykol oder Mischungen davon verwendet werden.

3. Tinte nach Anspruch 1,
**dadurch gekennzeichnet,**
**daß** als organisches Lösungsmittel Propylenglykol verwendet wird.

4. Tinte nach Anspruch 1,
**dadurch gekennzeichnet,**
**daß** es sich bei dem Ionomer um ein Tetrafluorethylen-Fluorvinylether-Copolymer mit Säuregruppen handelt.

5. Tinte nach Anspruch 1,
**dadurch gekennzeichnet,**
**daß** das Ionomer in einer azidischen, Protonen leitenden H⁺-Form oder in einer nichtazidischen Form, vorzugsweise in einer nichtazidischen Na⁺- oder K⁺-Form, vorliegt.

6. Tinte nach Anspruch 1,
**dadurch gekennzeichnet,**
**daß** das Ionomer in einer Konzentration von 1 bis 10 Gew.-%, bezogen auf das Gesamtgewicht der Lösung, in den organischen Lösungsmitteln gelöst ist.

7. Tinte nach Anspruch 1,
**dadurch gekennzeichnet,**
**daß** es sich bei dem Katalysator um Trägerkatalysatoren von katalytisch aktiven Platingruppenmetallen oder Legierungen davon auf einem elektrisch leitfähigen und hochoberflächigen Kohlenstoff handelt.

8. Tinte nach Anspruch 1,
**dadurch gekennzeichnet,**
**daß** es sich bei dem Katalysator um Mohre der Platingruppenmetalle oder Legierungen davon handelt.

9. Tinte nach Anspruch 1,
**dadurch gekennzeichnet,**
**daß** sie weiterhin Wasser enthält.

10. Tinte nach Anspruch 1,
**dadurch gekennzeichnet,**
**daß** sie weiterhin Natronlauge enthält.

11. Verfahren zur Herstellung einer Membran-Elektroden-Einheit für Polymer-Elektrolyt-Brennstoffzellen
**dadurch gekennzeichnet,**
**daß** eine Polymer-Elektrolyt-Membran mit einer Tinte beschichtet wird, die einen Katalysator, ein Ionomer und organische Lösungsmittel aufweist, wobei als organische Lösungsmittel ein- und mehrwertige Alkohole, Glykole sowie Glykoletheralkohole und Glykolether mit einer Verdunstungszahl größer 600, bevorzugt größer 800, zum Einsatz kommen.

12. Verfahren gemäß Anspruch 11, wobei die Beschichtung im Siebdruckverfahren erfolgt.

13. Verfahren nach Anspruch 11, wobei die Beschichtung bei Temperaturen zwischen 60 und 140°C, bevorzugt zwischen 70 und 120°C, getrocknet wird.

14. Verwendung der Tinte gemäß einem der Ansprüche 1 bis 10 zur Herstellung von Membran-Elektroden-Einheiten für Polymer-Elektrolyt-Brennstoffzellen.

15. Verwendung der Tinte gemäß einem der Ansprüche 1 bis 10 in einem Verfahren zur Herstellung von Membran-Elektroden-Einheiten für Polymer-Elektrolyt-Brennstoffzellen.
